# EUROPÄISCHE PATENTANMELDUNG

(11) **EP 1 777 905 A1**
(43) Veröffentlichungstag der Anmeldung: **25.04.2007**
(21) Anmeldenummer: 05460029.1
(22) Anmeldetag: 20.10.2005
(51) Int. Cl.: H04L 27/26

(54) **Verfahren zur Datenübertragung in einem Funkkommunikationssystem**

(71) Anmelder: SIEMENS AKTIENGESELLSCHAFT, 80333 München (DE)
(72) Erfinder: Angelow, Iwajlo, 43-430 Skoczow (PL); Breuer, Volker, 16727 Bötzow (DE); Chmiel, Mieszko, 48-340 Glucholazy (PL)

(57) **Zusammenfassung**

Die Erfindung betrifft ein Verfahren zur Datenübertragung in einem Funkkommunikationssystem, bei dem Daten mehrerer Teilnehmer mit Hilfe eines Multiplexverfahrens zu Rahmen zusammengefasst und mittels Subträger übertragen werden. Zur Übertragung der Rahmen werden zumindest zwei Rahmenstrukturen bereitgestellt, wobei sich die Rahmenstrukturen in einer jeweils zugeordneten Anzahl an Pilotsignalen und/oder in einer Verteilung bzw. Gruppierung von zugeordneten Pilotsignalen unterscheiden und wobei die Pilotsignale zur Bestimmung von Funkübertragungskanaleigenschaften verwendbar sind.

Von jedem Teilnehmer wird eine individuelle Fortbewegungsgeschwindigkeit ermittelt und jeder Teilnehmer wird in Abhängigkeit seiner Fortbewegungsgeschwindigkeit einem von zumindest zwei Geschwindigkeitsbereichen zugeordnet. Zur Übertragung der Daten von Teilnehmern, die aufgrund ihrer Fortbewegungsgeschwindigkeit einem identischen Geschwindigkeitsbereich zugeordnet sind, wird eine dem Geschwindigkeitsbereich individuell zugeordnete Rahmenstruktur einerseits und eine individuell zugeordnete Anzahl an Subträgern andererseits verwendet.

## Beschreibung

Die Erfindung betrifft ein Verfahren zur Datenübertragung in einem Funkkommunikationssystem gemäß dem Oberbegriff des Patentanspruchs 1.

Es sind Funkkommunikationssysteme bekannt, bei denen in benachbarten Funkzellen gleiche Trägerfrequenzen als Funkübertragungsressourcen verwendet werden. Damit ergibt sich über die Funkzellen betrachtet ein so genannter "Frequency-Reuse" von "eins".

Diese Art der Zuordnung wird insbesondere bei den so genannten "OFDM-Funkkommunikationssystemen" verwendet, bei denen benachbarte Funkzellen gleiche Subträger zur Funkübertragung verwenden. Mehrere Subträger eines System können zu einem so gennanten "frequency-chunk" zusammengefasst werden.

Bei OFDM-Funk-kommunikationssystemen werden Subträger auch in Zeitbereiche unterteilt. Jeder Zeitbereich eines Subträgers bildet dann eine als "Rahmen" bezeichnete Funkübertragungsressource.

Eine breitbandige Fortentwicklung des bekannten UTRA-Funkübertragungsstandards wird als "Evolved-UTRA, E-UTRA" bezeichnet. Dabei sollen für Funkübertragungen sowohl "Time Division Duplex, TDD"-Übertragungsverfahren als auch "Frequency Division Duplex, FDD"-Übertragungsverfahren bzw. deren Kombinationen unterstützt werden. Beim Standard E-UTRA werden ebenfalls OFDM-Funkübertragungstechniken verwendet.

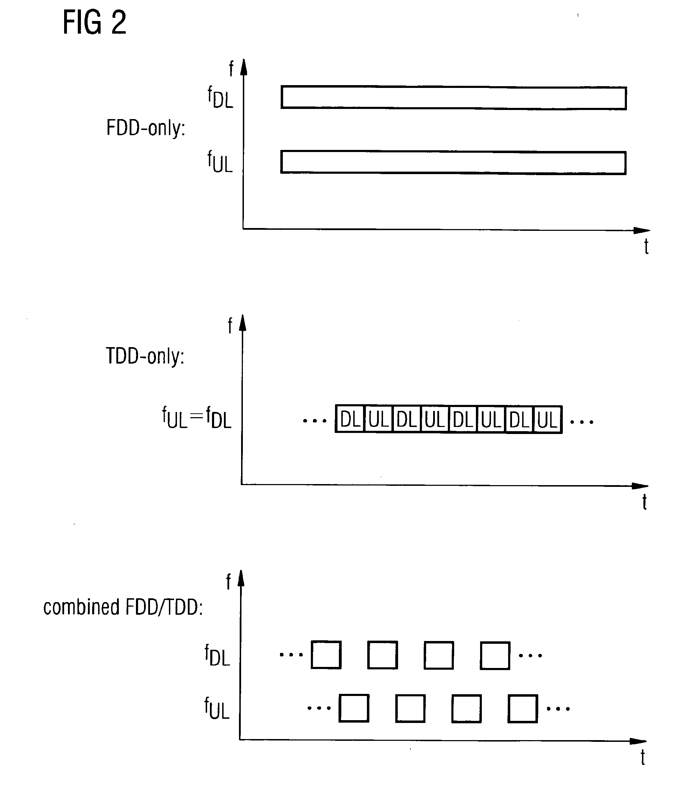

FIG 2 zeigt beispielhaft Funkübertragungsressourcen einer als "FDD-only", einer als TDD-only" und einer als "combined FDD/TDD" bezeichneten Übertragungstechnik.

Bei der als "FDD-only" bezeichneten Übertragungstechnik werden sowohl für Übertragungen von einer Teilnehmerstation zu einer Basisstation als auch für Übertragungen von der Basisstation zur Teilnehmerstation verschiedene Frequenzbänder gleichzeitig verwendet. Für die als Uplink UL bezeichnete Richtung von Teilnehmerstation zur Basisstation wird ein Frequenzband f_{UL} verwendet, während für die als Downlink DL bezeichnete Richtung von Basisstation zur Teilnehmerstation ein Frequenzband f_{DL} verwendet wird. Diese Übertragungstechnik bietet den Vorteil sehr hoher Datenübertragungsraten.

Bei der als "TDD-only" bezeichneten Übertragungstechnik wird für Übertragungen in die als Uplink UL bezeichnete Richtung von Teilnehmerstation zur Basisstation und für die als Downlink DL bezeichnete Richtung von Basisstation zur Teilnehmerstation ein gemeinsames Frequenzband f_{DL} = f_{UL} verwendet. Beispielhaft gezeigt sind vier Zeitbereiche bzw. Zeitschlitze für Übertragungen in Richtung Downlink DL und vier Zeitbereiche bzw. Zeitschlitze für Übertragungen in Richtung Uplink UL, die wechselweise aufeinander folgen.

Bei der als "combined FDD/TDD" oder auch als "half-duplex FDD" bezeichneten Übertragungstechnik werden die Übertragungsverfahren "TDD-only" und "FDD-only" kombiniert. Gezeigt sind hier beispielhaft vier Zeitbereiche bzw. Zeitschlitze für Übertragungen in Richtung Uplink UL im zugeordneten Frequenzband f_{UL} und vier Zeitbereiche bzw. Zeitschlitze für Übertragungen in Richtung Downlink DL im zugeordneten Frequenzband f_{DL}. Bei "combined FDD/TDD" ist es möglich, vereinfachte Empfängerstrukturen seitens einer als "user equipment, UE" bezeichneten Teilnehmerstation zu erzielen.

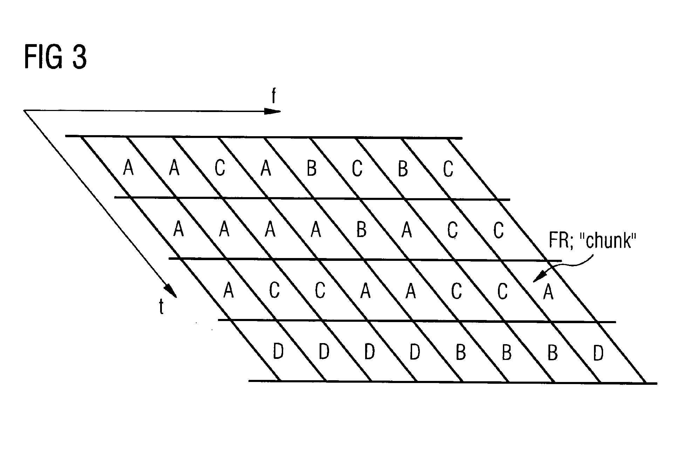

FIG 3 zeigt als "chunc" bezeichnete Funkübertragungsressourcen FR eines OFDM-Funkkommunikationssystems bzw. E-UTRA-Funkkommunikationssystems.

Dabei sind auf einer horizontalen Frequenzachse f so genannte "Subträger" aufgetragen, während auf einer vertikalen Zeitachse t Zeitabschnitte bzw. Zeitbereiche aufgetragen sind.

Beispielhaft sind hier zwölf Funkübertragungsressourcen FR einem ersten Teilnehmer A zugeordnet, während einem zweiten Teilnehmer B insgesamt sechs Funkübertragungsressourcen FR zugeordnet sind. Weiter sind einem dritten Teilnehmer C insgesamt neun Funkübertragungsressourcen FR und einem vierten Teilnehmer D insgesamt fünf Funkübertragungsressourcen FR zugeordnet.

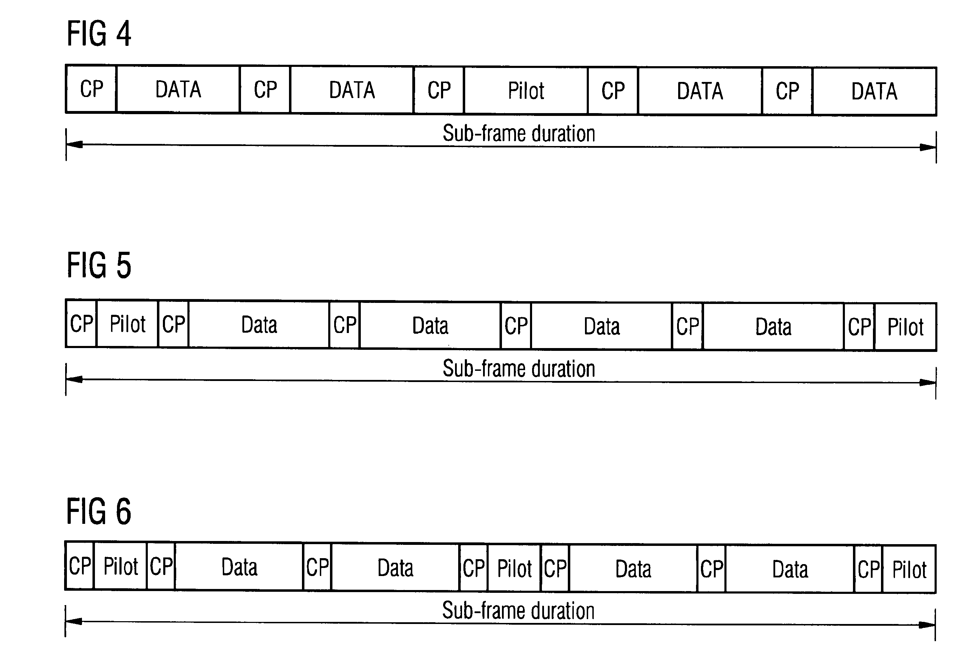

FIG 4 zeigt eine erste Rahmenstruktur der rahmenweise erfolgenden E-UTRA-Funkübertragung für einen Teilnehmer, der seine geografische Position nicht bzw. mit einer geringen Fortbewegungsgeschwindigkeit ändert.

Ein Rahmen "subframe" weist eine als "subframe duration" bezeichnete zeitliche Länge von 0,5 ms auf. Innerhalb des Rahmens "subframe" sind insgesamt vier Zeitbereiche "Data" vorgesehen, die für eine Nutzdatenübertragung von Teilnehmern verwendbar sind. Dabei werden mit Hilfe eines Multiplexverfahrens die Zeitbereiche "Data" des Rahmens "subframe" einem oder mehreren Teilnehmern zugeordnet.

Weiter ist ein Zeitbereich "Pilot" vorgesehen, der zur Übertragung eines Pilotsignals verwendbar ist. Mit Hilfe des Pilotsignals ist es möglich, Eigenschaften von Funkübertragungskanälen gegebenenfalls durch Schätzung zu bestimmen.

Um die genannten Teilnehmer-Zeitbereiche "Data" sowie den Pilotsignal-Zeitbereich "Pilot" unterscheiden zu können, wird in weiteren fünf Zeitbereichen CP ein so genannter "cyclic prefix, CP" übertragen.

FIG 5 zeigt eine zweite Rahmenstruktur der rahmenweise erfolgenden E-UTRA-Funkübertragung für einen Teilnehmer, der seine geografische Position mit einer mittleren Fortbewegungsgeschwindigkeit ändert.

Der Rahmen "subframe" weist eine als "Subframe duration" bezeichnete zeitliche Länge von 0,5 ms auf.

Innerhalb des Rahmens "subframe" sind insgesamt vier Zeitbereiche "Data" vorgesehen, die für eine Nutzdatenübertragung von Teilnehmern verwendbar sind. Dabei werden mit Hilfe eines Multiplexverfahrens die Zeitbereiche "Data" des Rahmens "subframe" einem Teilnehmer oder mehreren Teilnehmern zugeordnet.

Weiter sind zwei Zeitbereiche "Pilot" als so genannte "short blocks" vorgesehen, die zur Übertragung von zwei Pilotsignalen verwendbar sind. Mit Hilfe der beiden Pilotsignale ist es möglich, Eigenschaften von Funkübertragungskanälen gegebenenfalls durch Schätzung zu bestimmen.

Um die genannten Teilnehmer-Zeitbereiche "Data" und die beiden Pilotsignal-Zeitbereiche "Pilot" unterscheiden zu können, wird in weiteren sechs Zeitbereichen CP wiederum ein so genannter "cyclic prefix, CP" übertragen.

FIG 6 zeigt eine dritte Rahmenstruktur der rahmenweise erfolgenden E-UTRA-Funkübertragung für einen Teilnehmer, der seine geografische Position mit einer hohen Fortbewegungsgeschwindigkeit ändert.

Der Rahmen "subframe" weist eine als "Subframe duration" bezeichnete zeitliche Länge von 0,5 ms auf.

Innerhalb des Rahmens "subframe" sind insgesamt vier Zeitbereiche "Data" vorgesehen, die für eine Nutzdatenübertragung von Teilnehmern verwendbar sind. Dabei werden mit Hilfe eines Multiplexverfahrens die Zeitbereiche "Data" des Rahmens "subframe" einem Teilnehmer oder mehreren Teilnehmern zugeordnet.

Weiter sind drei Zeitbereiche "Pilot" als so genannte "short blocks" vorgesehen, die zur Übertragung von Pilotsignalen verwendbar sind. Mit Hilfe der Pilotsignale ist es möglich, Eigenschaften von Funkübertragungskanälen gegebenenfalls durch Schätzung zu bestimmen.

Um die genannten Teilnehmer-Zeitbereiche "Data" und die Pilotsignal-Zeitbereiche "Pilot" unterscheiden zu können, wird in weiteren sieben Zeitbereichen CP wiederum ein so genannter "cyclic prefix, CP" übertragen.

Die in den Figuren FIG 4, FIG 5 und FIG 6 gezeigten unterschiedlichen Rahmenstrukturen werden benötigt, weil in Abhängigkeit von einer individuellen Fortbewegungsgeschwindigkeit des Teilnehmers, mit der er seine geografische Position verändert, für eine genaue Kanalschätzung jeweils unterschiedliche Anzahlen an Pilotsignalen notwendig sind.

Gemäß der technischen Spezifikation TR 25.913, Kapitel 7.3. sollen insbesondere drei Geschwindigkeitsbereiche bei E-UTRA-Funkkommunikationssystemen unterstützt werden.

Ein erster Geschwindigkeitsbereich für "geringe Geschwindigkeiten" umfasst das Intervall von 0 km/h bis 15 km/h, ein zweiter Geschwindigkeitsbereich für "mittlere Geschwindigkeiten" umfasst das Intervall von 15 km/h bis 120 km/h und ein dritter Geschwindigkeitsbereich für "hohe Geschwindigkeiten" umfasst das Intervall von 120 km/h bis 350 km/h.

Ändert ein betrachteter Teilnehmer seine individuelle Geschwindigkeit, so ist derzeit eine ständig wechselnde Zuordnung der Rahmenstruktur von zugeordneten Funkübertragungsressourcen vorgesehen.

Diese ständig wechselnde Zuordnung der Rahmenstruktur führt insbesondere dann zu Problemen, wenn mehrere Teilnehmer auf eine Rahmenstruktur unter Verwendung eines Multiplexverfahrens zusammengefasst werden müssen.

Ändert ein Teilnehmer einer durch "Multiplexing" zusammengefassten Gruppe seine Geschwindigkeit, so ist die Zuordnung der Gruppe zu einer gemeinsamen Rahmenstruktur nicht für alle Teilnehmer der Gruppe optimal.

Je nach gewählter Fortbewegungs-Geschwindigkeit eines betrachteten Teilnehmers wird durch die zugeordnete Rahmenstruktur bzw. der dadurch bestimmten Pilotsignalverteilung für diesen Teilnehmer auch die Kanalschätzung beeinflusst. Von einer Genauigkeit der Kanalschätzung wiederum ist für jeden Teilnehmer eine Übertragungsqualität und/oder Übertragungsdatenrate abhängig.

Es ist daher Aufgabe der vorliegenden Erfindung, ein Verfahren für eine Zuweisung von Funkübertragungsressourcen in einem Funkkommunikationssystem, bei dem Nutzdaten von Teilnehmern rahmenweise und unter Verwendung von Subträgern übertragbar sind, anzugeben, mit dem eine optimierte Teilnehmer-Nutzdatenübertragung durchführbar ist.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren werden Daten mehrerer Teilnehmer mit Hilfe eines Multiplexverfahrens zu Rahmen zusammengefasst und mittels Subträger übertragen. Zur Übertragung der Rahmen werden zumindest zwei Rahmenstrukturen bereitgestellt, wobei sich die Rahmenstrukturen in einer jeweils zugeordneten Anzahl an Pilotsignalen und/oder in einer jeweiligen Verteilung bzw. Gruppierung von zugeordneten Pilotsignalen unterscheiden, wobei die Pilotsignale zur Bestimmung von Funkübertragungskanaleigenschaften verwendbar sind.

Erfindungsgemäß wird von jedem Teilnehmer eine individuelle Fortbewegungsgeschwindigkeit ermittelt und jeder Teilnehmer wird in Abhängigkeit seiner Fortbewegungsgeschwindigkeit einem von zumindest zwei Geschwindigkeitsbereichen zugeordnet.

Zur Übertragung der Daten von Teilnehmern, die aufgrund ihrer Fortbewegungsgeschwindigkeit einem identischen Geschwindigkeitsbereich zugeordnet sind, wird eine dem Geschwindigkeitsbereich individuell zugeordnete Rahmenstruktur einerseits und eine individuell zugeordnete Anzahl an Subträgern andererseits verwendet.

Weisen die Rahmenstrukturen eine gleiche Anzahl an Pilotsignalen auf, die jedoch unterschiedlich verteilt sind bzw. gruppiert sind, dann ist diese Ausgestaltung insbesondere bei hohen Geschwindigkeiten vorteilhaft.

In einer vorteilhaften Weiterbildung wird eine erste Rahmenstruktur einem ersten Geschwindigkeitsbereich zugeordnet, wobei die erste Rahmenstruktur zwei Pilotsignale in vorbestimmten zwei Zeitbereichen aufweist. Diese erste Rahmenstruktur ist insbesondere zur Datenübertragung von Teilnehmern geeignet, die eine niedrigere individuelle Teilnehmergeschwindigkeit aufweisen.

Entsprechend wird eine zweite Rahmenstruktur einem zweiten Geschwindigkeitsbereich zugeordnet, wobei die zweite Rahmenstruktur drei Pilotsignale in vorbestimmten drei Zeitbereichen aufweist. Diese zweite Rahmenstruktur ist insbesondere zur Datenübertragung von Teilnehmern geeignet, die eine höhere individuelle Teilnehmergeschwindigkeit aufweisen.

In einer vorteilhaften Weiterbildung werden bei geringem Steuerungsaufwand Nutzdaten von Teilnehmern, die aufgrund ihrer individuellen Teilnehmergeschwindigkeit einem gleichen Geschwindigkeitsbereich zugeordnet sind, mit Hilfe eines Multiplex-Verfahrens zusammen in einem gemeinsamen und als "Subframe" bezeichneten Rahmen übertragen.

Durch die abhängig vom Geschwindigkeitsbereich gewählte Rahmenstruktur ist eine genaue, an die Geschwindigkeit anpassbare Kanalschätzung über die jeweiligen Pilotsignale der Rahmenstruktur möglich.

Durch das erfindungsgemäße Verfahren erfolgt bei geringem Steuerungsaufwand eine stets optimierte Zuweisung von Funkübertragungsressourcen bzw. Subträgern oder "chunks".

Besonders vorteilhaft kann in Abhängigkeit von einem Funkverkehrsaufkommen und/oder von überwiegenden individuellen Teilnehmergeschwindigkeiten eine adaptive Zuordnung von "chunks" bzw. Funkübertragungsressourcen zu jeweiligen Geschwindigkeitsbereichen erfolgen.

In einer weiteren vorteilhaften Ausgestaltung werden die den Geschwindigkeitsbereichen zugeordneten Subträger bzw. Frequenzbereiche nicht zusammenhängend gewählt. Vorteilhaft ergibt sich eine Unterteilung des Frequenzbereichs bzw. der Subträgerzuordnung aus der Gesamtanzahl der Subträger bzw. "chunks", die sich der jeweils einer an eine bestimmte Geschwindigkeit angepassten Rahmenstruktur bedienen.

Insbesondere für Autofahrer, die ihre jeweilige Geschwindigkeit der Straßenverkehrslage angepasst stetig ändern, wird durch das erfindungsgemäße Verfahren ein effektives Multiplexing ermöglicht.

Bei einer ständigen Veränderung der individuellen Fortbewegungsgeschwindigkeit eines betrachteten Teilnehmers muss keine Rahmenstruktur innerhalb eines Subträgers ständig verändert werden, was ansonsten ein effektives multiplexen des betrachteten Teilnehmers mit anderen Teilnehmern verhindern würde.

Erfindungsgemäß wird eine Rahmenstruktur pro Subträger beibehalten. Ein Teilnehmer wird nur dann auf einen anderen Subträger gelegt, wenn dieser eine für die individuelle Fortbewegungsgeschwindigkeit des Teilnehmers optimale Rahmenstruktur aufweist.

Somit wird nur ein sich bezüglich der Geschwindigkeit verändernder Teilnehmer optimal durch Verlagerung angepasst. Weitere, im gleichen Bereich mittels Multiplex-Verfahren zusammengefasste Teilnehmer bleiben von der Veränderung bzw. geänderten Zuordnung unberührt.

Nachfolgend wir die Erfindung anhand einer Zeichnung näher erläutert. Dabei zeigt:
- FIG 1: eine Aufteilung und Zuordnung von Funkübertragungsressourcen gemäß dem erfindungsgemäßen Verfahren,
- FIG 2: die eingangs beschriebenen Funkübertragungsressourcen einer "FDD-only", einer TDD-only" und einer "combined FDD/TDD" Übertragungstechnik,
- FIG 3: die eingangs beschriebenen Funkübertragungsressourcen eines OFDM- bzw. E-UTRA-Funkkommunikationssystems,
- FIG 4: die eingangs beschriebene erste Rahmenstruktur einer E-UTRA-Funkübertragung für geringe Teilnehmergeschwindigkeiten,
- FIG 5: die eingangs beschrieben zweite Rahmenstruktur einer E-UTRA-Funkübertragung für mittlere Teilnehmergeschwindigkeiten, und.
- FIG 6: die eingangs beschrieben dritte Rahmenstruktur einer E-UTRA-Funkübertragung für hohe Teilnehmergeschwindigkeiten.

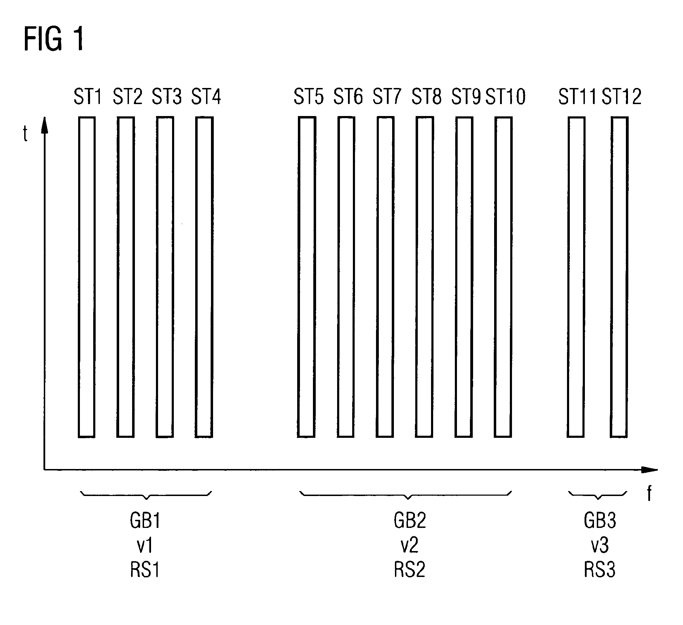

FIG 1 zeigt eine Aufteilung und Zuordnung von Funkübertragungsressourcen FR gemäß dem erfindungsgemäßen Verfahren.

Für eine Funkübertragung stehen insgesamt zwölf Subträger ST1 bis ST12 zur Verfügung. Die Subträger ST1 bis ST12 sind dabei als Funkübertragungsressourcen in drei Geschwindigkeitsbereiche GB1, GB2 und GB3 unterteilt.

Die Subträger ST1 bis ST4 sind einem ersten Geschwindigkeitsbereich GB1 zugeordnet und werden für Funkübertragungen von Teilnehmern verwendet, deren individuelle Geschwindigkeit v1 einem Intervall von 0 km/h bis 15 km/h entspricht.

Den Subträgern ST1 bis ST4 ist eine erste Rahmenstruktur RS1 zugeordnet, die beispielsweise der Rahmenstruktur gemäß FIG 4 entspricht.

Für die vergleichsweise niedrigen Teilnehmergeschwindigkeiten eignet sich diese Rahmenstruktur aufgrund ihres Pilotsignals.

Die Subträger ST5 bis ST10 sind einem zweiten Geschwindigkeitsbereich GB2 zugeordnet und werden für Funkübertragungen von Teilnehmern verwendet, deren individuelle Geschwindigkeit v2 einem Intervall von 15 km/h bis 120 km/h entspricht.

Den Subträgern ST5 bis ST10 ist eine zweite Rahmenstruktur RS2 zugeordnet, die beispielsweise der Rahmenstruktur gemäß FIG 5 entspricht.

Für die vergleichsweise mittleren Teilnehmergeschwindigkeiten eignet sich diese Rahmenstruktur aufgrund ihrer zwei Pilotsignale.

Die Subträger ST11 und ST12 sind einem dritten Geschwindigkeitsbereich GB3 zugeordnet und werden für Funkübertragungen von Teilnehmern verwendet, deren individuelle Geschwindigkeit v3 einem Intervall von 120 km/h bis 350 entspricht.

Den Subträgern ST11 und ST12 ist eine dritte Rahmenstruktur RS3 zugeordnet, die beispielsweise der Rahmenstruktur gemäß FIG 6 entspricht.

Für die vergleichsweise hohen Teilnehmergeschwindigkeiten eignet sich diese Rahmenstruktur aufgrund ihrer drei Pilotsignale.

Die individuelle Fortbewegungsgeschwindigkeit eines Teilnehmers kann beispielsweise mit Hilfe einer Signallaufzeitmessung (Bestimmung der "time of arrival", TOA zwischen einem Sender und einem Empfänger) oder durch aufeinander folgende Positionsbestimmungen bestimmt werden - gegebenenfalls unter Verwendung von GPS.

Handelt es sich bei einem betrachteten Teilnehmer beispielsweise um einen Fußgänger, wird dem Teilnehmer der erste Geschwindigkeitsbereich GB1 zugeordnet. Eine Nutzdatenübertragung zwischen dem Teilnehmer und einer Basisstation erfolgt dann unter Verwendung der ersten Rahmenstruktur RS1 durch einen oder durch mehrere der Subträger ST1 bis ST4.

Handelt es sich jedoch bei dem betrachteten Teilnehmer um einen Autofahrer auf einer Autobahn, so wird diesem beispielsweise der dritte Geschwindigkeitsbereich GB3 zugeordnet. Eine Nutzdatenübertragung zwischen dem Teilnehmer und der Basisstation erfolgt dann unter Verwendung der dritten Rahmenstruktur RS3 durch den Subträger ST11 und/oder durch den Subträger ST12.

## Patentansprüche

1. Verfahren zur Datenübertragung in einem Funkkommunikationssystem,
- bei dem Daten mehrerer Teilnehmer mit Hilfe eines Multiplexverfahrens zu Rahmen zusammengefasst und mittels Subträger übertragen werden,
- bei dem zur Übertragung der Rahmen zumindest zwei Rahmenstrukturen bereitgestellt werden, wobei sich die Rahmenstrukturen in einer jeweils zugeordneten Anzahl von Pilotsignalen und/oder in einer Verteilung von Pilotsignalen unterscheiden und wobei die Pilotsignale zur Bestimmung von Funkübertragungskanaleigenschaften verwendbar sind,
**dadurch gekennzeichnet,**
- **dass** von jedem Teilnehmer eine individuelle Fortbewegungsgeschwindigkeit ermittelt wird und dass jeder Teilnehmer in Abhängigkeit seiner Fortbewegungsgeschwindigkeit einem von zumindest zwei Geschwindigkeitsbereichen zugeordnet wird, und
- **dass** zur Übertragung der Daten von Teilnehmern, die aufgrund ihrer Fortbewegungsgeschwindigkeit einem identischen Geschwindigkeitsbereich zugeordnet sind, eine dem Geschwindigkeitsbereich individuell zugeordnete Rahmenstruktur einerseits und eine individuell zugeordnete Anzahl an Subträgern andererseits verwendet wird.

2. Verfahren nach Anspruch 1, **dadurch gekennzeichnet, dass** zur Datenübertragung Subträger eines OFDM-Funkkommunikationssystems verwendet werden.

3. Verfahren nach Anspruch 1 oder 2, **dadurch gekennzeichnet, dass** zur Datenübertragung in Zeitbereiche unterteilte Subträger eines OFDM-Funkkommunikationssystem verwendet werden.

4. Verfahren nach Anspruch 1, **dadurch gekennzeichnet, dass** die Zuordnung der Rahmenstruktur zu einem individuellen Geschwindigkeitsbereich und/oder die Zuordnung der Subträgeranzahl zu einem individuellen Geschwindigkeitsbereich seitens einer Basisstation des Funkkommunikationssystems festgelegt wird.

5. Verfahren nach Anspruch 1, **dadurch gekennzeichnet, dass** die Zuordnung von Teilnehmern zu einem der Geschwindigkeitsbereiche seitens einer Basisstation des Funkkommunikationssystems festgelegt wird.

6. Verfahren nach Anspruch 1, **dadurch gekennzeichnet, dass** eine Anzahl von Geschwindigkeitsbereichen sowie deren jeweiliger Grenzen seitens der Basisstation festgelegt wird.

7. Verfahren nach Anspruch 4, 5 oder 6, **dadurch gekennzeichnet, dass** die jeweilige Festlegung adaptiv und in Abhängigkeit einer Teilnehmerverkehrslast erfolgt.

8. Verfahren nach einem der vorhergehenden Ansprüche, **dadurch gekennzeichnet, dass** durch eine erste Rahmenstruktur eines zugeordneten ersten Geschwindigkeitsbereichs Pilotsignale in vorbestimmten zwei Zeitbereichen übertragen werden.

9. Verfahren nach Anspruch 8, **dadurch gekennzeichnet, dass** die Pilotsignale als Gruppen einer ersten Länge übertragen werden.

10. Verfahren nach einem der vorhergehenden Ansprüche, **dadurch gekennzeichnet, dass** durch eine zweite Rahmenstruktur eines zugeordneten zweiten Geschwindigkeitsbereichs Pilotsignale in vorbestimmten drei Zeitbereichen übertragen werden.

11. Verfahren nach Anspruch 10, **dadurch gekennzeichnet, dass** die Pilotsignale als verkürzte Gruppen einer zweiten Länge übertragen werden.

12. Verfahren nach einem der Ansprüche 8 bis 11, **dadurch gekennzeichnet,**
- **dass** die erste Rahmenstruktur für Teilnehmer verwendet wird, die aufgrund ihrer niedrigen individuellen Teilnehmergeschwindigkeit dem ersten Geschwindigkeitsbereich zugeordnet sind, und
- **dass** die zweite Rahmenstruktur für Teilnehmer verwendet wird, die aufgrund ihrer höheren individuellen Teilnehmergeschwindigkeit dem zweiten Geschwindigkeitsbereich zugeordnet sind.

13. Verfahren nach einem der vorhergehenden Ansprüche, **dadurch gekennzeichnet, dass** anhand der übertragenen Pilotsignale eine Kanalschätzung für eine optimierte Teilnehmer-Nutzdatenübertragung durchgeführt wird.

14. Verfahren nach einem der vorhergehenden Ansprüche, **dadurch gekennzeichnet, dass** Nutzdaten eines ersten und eines zweiten Teilnehmers, die einem gleichen Geschwindigkeitsbereich zugeordnet sind, durch ein Multiplexverfahren zusammengefasst werden.

15. Verfahren nach einem der vorhergehenden Ansprüche, **dadurch gekennzeichnet, dass** als Funkkommunikationssystem ein E-UTRA-Mobilfunksystem oder ein OFDM-Funkkommunikationssystem verwendet wird.
